# EUROPEAN PATENT APPLICATION

(11) **EP 3 809 747 A1**
(43) Date of publication of application: **21.04.2021**
(21) Application number: 19823090.6
(22) Date of filing: 20.06.2019
(51) Int. Cl.: H04W 28/00

(54) **RADIO LINK MONITORING METHOD AND TERMINAL DEVICE**

(30) Priority: 20.06.2018 CN 201810639200
(71) Applicant: GUANGDONG OPPO MOBILE TELECOMMUNICATIONS CORP., LTD., Dongguan Guangdong 523860 (CN)
(72) Inventor: XU, Weijie, Dongguan, Guangdong 523860 (CN)
(74) Representative: Penza, Giancarlo
(86) International application number: PCT/CN2019/092056
(87) International publication number: WO 2019/242681

(57) **Abstract**

A radio link monitoring (RLM) method and a terminal device, capable of improving the accuracy of performing RLM on an unlicensed frequency band. The method comprises: the terminal device performs RLM on a first resource; and the terminal device determines, according to an RLM measurement result on the first resource, and an RLM measurement result on a second resource or the reception of a downlink signal whether to report a synchronization IS indication and/or an out-of-synchronization (OOS) indication.

## Description

The present application claims the priority of a Chinese patent application filed in the China patent office on June 20, 2018 with application number 201810639200.X and the invention name "radio link monitoring method and terminal device", an entire content of which is incorporated by reference herein.

### Technical Field

Embodiments of the present application relate to the field of communication, in particular to a Radio Link Monitoring (RLM) method and a terminal device.

### Background

In a New Radio (NR) system (or referred to as a 5G system, a 5G network), the data transmission on unlicensed frequency bands is supported. When a communication device communicates on the unlicensed frequency bands, it needs to be based on a principle of Listen Before Talk (LBT). For example, before a base station sends a signal to a terminal device on a channel of unlicensed frequency bands, it needs to perform a channel detection first, and only when a result of the channel detection is idle, can the signal be sent; if the result of the channel detection by the base station on the unlicensed frequency bands is that the channel is busy, the signal cannot be sent.

The terminal device will receive, on the unlicensed frequency bands, a reference signal sent by the base station for RLM measurement. When a quality of the reference signal measured by the terminal device is very poor, the terminal device cannot know whether it is caused by the inability of base station to send the reference signal due to the busy channel or a poor quality of the channel of the terminal device. In this case, an actual channel condition cannot be accurately determined based on a result of the RLM measurement of the reference signal.

### Summary

Embodiments of the present application provide a method for monitoring a wireless link and a terminal device, which can improve accuracy of wireless link monitoring on an unauthorized frequency band.

In a first aspect, a method for monitoring a wireless link is provided, including: performing, by a terminal device, radio link monitoring (RLM) on a first resource; and determining, by the terminal device, whether to report an in sync (IS) indication and/or an out of sync (OOS) indication according to a result of RLM measurement on the first resource, and a result of RLM measurement or a downlink signal reception condition on a second resource.

In a second aspect, a method of radio link monitoring (RLM) is provided, including: receiving, by a terminal device, indication information sent by a network device, wherein the indication information indicates whether a first resource for radio link monitoring is an effective measurement resource; if the first resource is the effective measurement resource, the terminal device determining that a result of RLM measurement on the first resource is effective.

In a third aspect, a method for radio link monitoring is provided, including: determining, by a network device, whether a first resource for radio link monitoring by a terminal device is located within Channel Occupancy Time (COT); if the first resource is located within the COT, sending, by the network device, indication information to the terminal device, wherein the indication information is used for indicating that the first resource is an effective measurement resource.

In a fourth aspect, a terminal device is provided, which may perform the method in the above first aspect or any optional implementation of the first aspect. Specifically, the terminal device may include functional modules for performing the method in the above first aspect or any possible implementation of the first aspect.

In a fifth aspect, a terminal device is provided, which may perform the method in the above second aspect or any optional implementation of the second aspect. Specifically, the terminal device may include functional modules for performing the method in the above second aspect or any possible implementation of the second aspect.

In a sixth aspect, a network device is provided, which may perform the method in the above third aspect or any optional implementation of the third aspect. Specifically, the network device may include functional modules for performing the method in the above third aspect or any possible implementation of the third aspect.

In a seventh aspect, a terminal device is provided, including a processor and a memory. The memory is configured to store a computer program, and the processor is configured to call and run the computer program stored in the memory to execute the method in the above first aspect or any possible implementation of the first aspect.

In an eighth aspect, a terminal device is provided, including a processor and a memory. The memory is configured to store a computer program, and the processor is configured to call and run the computer program stored in the memory to execute the method in the above second aspect or any possible implementation of the second aspect.

In a ninth aspect, a network device is provided, including a processor and a memory. The memory is configured to store a computer program, and the processor is configured to call and run the computer program stored in the memory to execute the method in the above third aspect or any possible implementation of the third aspect.

In a tenth aspect, a chip is provided, which is configured to achieve the method in the above first aspect or any possible implementation of the first aspect. Specifically, the chip includes a processor, configured to call and run a computer program from a memory, so that a device on which the chip is installed performs the method in the above first aspect or any possible implementation of the first aspect.

In an eleventh aspect, a chip is provided, which is configured to achieve the method in the above second aspect or any possible implementation of the second aspect. Specifically, the chip includes a processor, configured to call and run a computer program from a memory, so that a device on which the chip is installed performs the method in the above second aspect or any possible implementation of the second aspect.

In a twelfth aspect, a chip is provided, which is configured to achieve the method in the above third aspect or any possible implementation of the third aspect. Specifically, the chip includes a processor, configured to call and run a computer program from a memory, so that a device on which the chip is installed performs the method in the above third aspect or any possible implementation of the third aspect.

In a thirteenth aspect, a computer readable storage medium is provided, which is configured to store a computer program which causes a computer to perform the method in the above first aspect or any possible implementation of the first aspect.

In a fourteenth aspect, a computer readable storage medium is provided, which is configured to store a computer program which causes a computer to perform the method in the above second aspect or any possible implementation of the second aspect.

In a fifteenth aspect, a computer readable storage medium is provided, which is configured to store a computer program which causes a computer to perform the method in the above third aspect or any possible implementation of the third aspect.

In a sixteenth aspect, a computer program product is provided, including computer program instructions which cause a computer to perform the method in the above first aspect or any possible implementation of the first aspect.

In a seventeenth aspect, a computer program product is provided, including computer program instructions which cause a computer to perform the method in the above second aspect or any possible implementation of the second aspect.

In an eighteenth aspect, a computer program product is provided, including computer program instructions which cause a computer to perform the method in the above third aspect or any possible implementation of the third aspect.

In a nineteenth aspect, a computer program is provided. The computer program, when being run on a computer, causes the computer to perform the method in the above first aspect or any possible implementation of the first aspect.

In a twentieth aspect, a computer program is provided. The computer program, when being run on a computer, causes the computer to perform the method in the above second aspect or any possible implementation of the second aspect.

In a twenty-first aspect, a computer program is provided. The computer program, when being run on a computer, causes the computer to perform the method in the above third aspect or any possible implementation of the third aspect.

According to the above technical solution, a terminal device not only reports an IS indication or an OOS indication based on a result of radio link monitoring on a first resource, but also determines whether to report the IS indication and/or the OOS indication by combining the result of radio link monitoring on the first resource with a result of radio link monitoring on a second resource or a downlink signal reception condition on the second resource, thereby improving the accuracy of radio link monitoring on unlicensed frequency bands.

### Brief Description of Drawings

FIG. 1 is a schematic diagram of a possible wireless communication system applied by an embodiment of the present application.
FIG. 2 is a schematic flow chart of a method for monitoring a radio link according to an embodiment of the present application.
FIG. 3 is a flow interaction diagram of a method for monitoring a radio link according to another embodiment of the present application.
FIG. 4 is a schematic block diagram of a terminal device according to an embodiment of the present application.
FIG. 5 is a schematic block diagram of a terminal device according to an embodiment of the present application.
FIG. 6 is a schematic block diagram of a network device according to an embodiment of the present application.
FIG. 7 is a schematic structural diagram of a communications device according to an embodiment of the present application.
FIG. 8 is a schematic diagram of a structure of a chip of an embodiment of the present application.
FIG. 9 is a schematic block diagram of a communication system according to an embodiment of the present application.

### Detailed Description

The technical solution in embodiments of the present application will be described below with reference to the drawings in embodiments of the present application. It is apparent that the embodiments described are just some embodiments of the present application, but not all embodiments of the present application. According to the embodiments of the present application, all other embodiments achieved by a person of ordinary skill in the art without paying an inventive effort are within the protection scope of the present application.

The technical solution of the embodiment of the present application may be applied to various communication systems, such as a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, an LTE Frequency Division Duplex (FDD) system, an LTE Time Division Duplex (TDD) system, an Advanced long term evolution (LTE-A) system, a New Radio (NR) system, an evolution system of the NR system, an LTE-based access to unlicensed spectrum (LTE-U) system, an NR-based access to unlicensed spectrum (NR-U) system, a Universal Mobile Telecommunication System (UMTS), a Worldwide Interoperability for Microwave Access (WiMAX) communication system, Wireless Local Area Networks (WLAN), Wireless Fidelity (WiFi), a next generation communication system or another communication system, etc.

Generally speaking, a traditional communication system supports a limited quantity of connections and is easy to implement. However, with the development of communication technology, a mobile communication system will not only support traditional communication, but also support, for example, Device to Device (D2D) communication, Machine to Machine (M2M) communication, Machine Type Communication (MTC), and Vehicle to Vehicle (V2V) communication, etc., and embodiments of the present application may also be applied to these communication systems.

Optionally, the communication system in the embodiment of the present application may be applied to a Carrier Aggregation (CA) scenario, or may be applied to a Dual Connectivity (DC) scenario, or may be applied to a Standalone (SA) network deployment scenario.

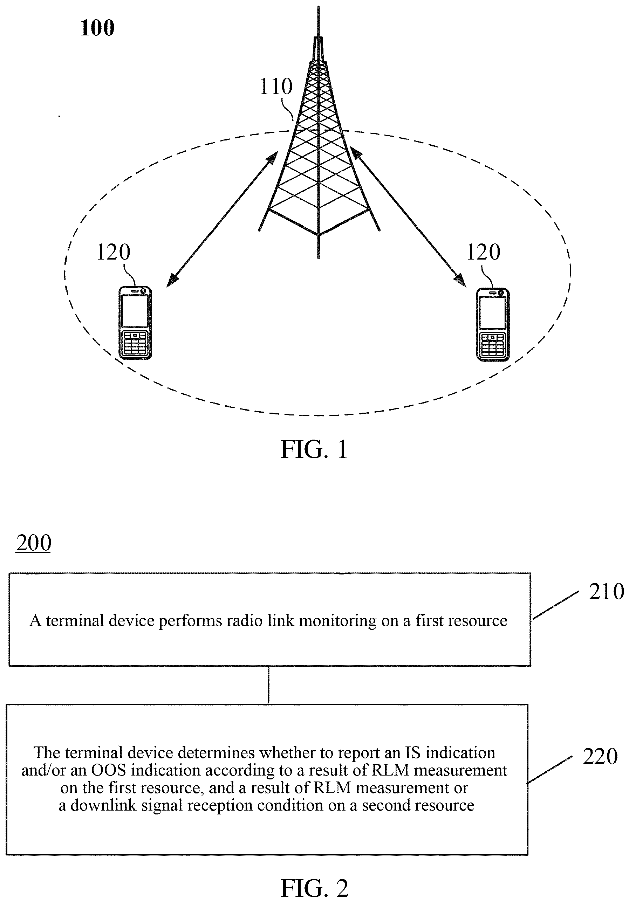

Illustratively, a communication system 100 applied in an embodiment of the present application is shown in FIG. 1. The wireless communication system 100 may include a network device 110. The network device 110 may be a device that communicates with a terminal device. The network device 110 may provide communication coverage for a specific geographical area, and may communicate with terminal devices located within the coverage area. Optionally, the network device 100 may be a Base Transceiver Station (BTS) in a GSM system or a CDMA system, or may be a NodeB (NB) in a WCDMA system, or may be an Evolutional Node B (eNB or eNodeB) in an LTE system, or a network side device in an NR system, or a radio controller in a Cloud Radio Access Network (CRAN). Or the network device may be a relay station, an access point, a vehicle-mounted device, a wearable device, a network side device in a next generation network, or a network device in a future evolved Public Land Mobile Network (PLMN), etc.

The wireless communication system 100 further includes at least one terminal device 120 in the coverage area of the network device 110. The terminal device 120 may be mobile or fixed. Optionally, the terminal device 120 may be referred to as an access terminal, a User Equipment (UE), a subscriber unit, a subscriber station, a mobile station, a mobility station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing device connected to a wireless modem, a vehicle-mounted device, a wearable device, a terminal device in a future 5G network, or a terminal device in a future evolved Public Land Mobile Network (PLMN), or the like. Herein, optionally, Device to Device (D2D) communication may also be performed between the terminal devices 120.

Specifically, the network device 110 may provide a service for a cell, and the terminal device 120 communicates with the network device 110 through a transmission resource (e.g., a frequency domain resource or a spectrum resource) used by the cell, which may be a cell corresponding to the network device 110 (e.g., a base station). A cell may belong to macro base station, or a base station corresponding to a Small cell. The small cell here may include: a Metro cell, a Micro cell, a Pico cell, a Femto cell, etc. These small cells have characteristics of small coverage range and low transmission power, and are suitable for providing high-speed data transmission services.

FIG. 1 exemplifies one network device and two terminal devices. Optionally, the wireless communication system 100 may include multiple network devices, and another quantity of terminal devices may be included within the coverage area of each network device, which is not limited in embodiments of the present application.

Optionally, the wireless communication system 100 may also include another network entity such as a network controller, a mobile management entity, and the embodiments of the present application are not limited thereto.

At present, a target scenario in an NR-based access to unlicensed spectrum (NR-U) system includes an SA scenario and a DC scenario, both of which need that an RLM operation is performed on an unlicensed frequency band. Before sending a signal on an unlicensed frequency band, the network device needs to listen to a channel to determine whether the channel is idle, and only when it is determined that the channel is idle, may the signal be sent. Therefore, when the network device sends a reference signal RLM-RS for radio link monitoring to the terminal device, the RLM-RS may be unable to be sent due to the busy channel, thus affecting radio link monitoring by the terminal device.

In an existing mechanism, when the terminal device performs a measurement based on RLM-RS, a Signal to Interference plus Noise Ratio (SINR) is obtained. When the SINR is higher than an in sync threshold Qin, the terminal device reports an in sync (IS) indication; and when the measured and obtained SINR is lower than an out of sync threshold Qout, the terminal device reports an out of sync (OOS) indication.

However, on an unlicensed frequency band, when an SINR measured by the terminal device is very low, the terminal device cannot know whether it is caused by the network device being unable to send RLM-RS due to a busy channel or a poor quality of a channel of the terminal device. If the RLM-RS cannot be sent because the channel is temporarily busy when the network device sends the RLM-RS, but in fact, once the channel is idle, the quality of the channel is still better, then in this case, a terminal cannot prepare to determine a current actual channel condition according to a result of RLM-RS measurement.

Therefore, the embodiment of the present application proposes that a terminal device not only reports an IS indication or an OOS indication based on a result of radio link monitoring on a first resource, but also determines whether to report the IS indication and/or the OOS indication by combining the result of radio link monitoring on the first resource with a result of radio link monitoring on a second resource or a downlink signal reception condition on the second resource, so as to improve the accuracy of radio link monitoring on an unlicensed frequency band.

In the embodiment of the present application, a reference signal RLM-RS used for RLM by the terminal device may include, for example, a reference signal such as a Channel State Information Reference Signal (CSI-RS) or a Synchronization Signal Block (SSB or SS Block), etc.

FIG. 2 is a schematic flow chart of a method 200 for monitoring a radio link according to an embodiment of the present application. The method described in FIG. 2 may be performed by a terminal device, wherein the terminal device may be, for example, the terminal device 120 shown in FIG. 1. As shown in FIG. 2, the method 200 for monitoring a radio link may include part or all of following acts.

In 210, a terminal device performs radio link monitoring on a first resource.

Optionally, the first resource is a resource configured by a network device for RLM.

For example, the terminal device may measure a Signal to Noise-Interference Ratio (SINR) on the first resource, if the measured and obtained SINR is greater than an in sync threshold Qin, the terminal device determines that a result of RLM measurement on the first resource is IS; if the measured and obtained SINR is less than an out of sync threshold Qout, the terminal device determines that the result of the RLM measurement on the first resource is OOS.

In 220, the terminal device determines whether to report an IS indication and/or an OOS indication according to a result of RLM measurement on the first resource, and a result of RLM measurement or a downlink signal reception condition on a second resource.

In the embodiment of the present application, after performing RLM on the first resource for RLM measurement, the terminal device obtains that a result of the RLM measurement on the first resource is IS or OOS. At this time, the terminal device should consider not only the result of the RLM measurement on the first resource, but also the result of the RLM measurement on the second resource or the downlink signal reception condition on the second resource, thereby determining whether a physical layer of the terminal device needs to report an IS indication and/or an OOS indication to its higher layer, so the accuracy of radio link monitoring on an unlicensed frequency band can be improved.

It should be understood that the first resource described herein may include one measurement resource or multiple measurement resources. The second resource may include one resource or multiple resources, and the second resource may be a measurement resource for radio link monitoring or a downlink resource for receiving a downlink signal, which is not limited in the embodiment of the present application.

Two modes for radio link monitoring in the embodiment of the present application are described in detail below.

### Mode 1

In this mode, the terminal device determines whether to report an IS indication and/or an OOS indication according to a result of RLM measurement on the first resource, and a downlink signal reception condition on the second resource.

Optionally, the terminal device determines whether to report an IS indication and/or an OOS indication according to a result of RLM measurement on the first resource, and a downlink signal reception condition on the second resource, including: if the result of the RLM measurement on the first resource is IS, the terminal device determines to report the IS indication.

Optionally, the terminal device determines whether to report an IS indication and/or an OOS indication according to a result of RLM measurement on the first resource, and a downlink signal reception condition on the second resource, including: if the result of the RLM measurement on the first resource is OOS, the terminal device determines whether to report the OOS indication according to whether the downlink signal sent by the network device is received on the second resource.

Optionally, if the terminal device receives the downlink signal on the second resource, the method further includes: the terminal device determines to report the IS indication.

Optionally, the terminal device determines whether to report the OOS indication according to whether the downlink signal sent by the network device is received on the second resource, including: if the terminal device receives the downlink signal on the second resource, the terminal device determines not to report the OOS indication; and/or if the terminal device does not receive the downlink signal on the second resource, the terminal device determines to report the OOS indication.

Herein, the second resource may include, for example, at least one downlink resource within a predetermined time period before a third resource, wherein the third resource is a resource for the terminal device to report the result of the RLM measurement on the first resource. The first resource may be located within the predetermined time period, and at this time, the second resource is a measurement resource or a downlink resource except the first resource within the predetermined time period; or, the first resource may also be located before or after the predetermined time period.

That is to say, when the result of the RLM measurement of the terminal device on the first resource is OOS, the terminal device may determine whether a downlink signal is received within a period of time before the third resource for reporting the OOS indication, that is, within the second resource. If the terminal device receives a downlink signal on the second resource, indicating that the result of the RLM measurement on the first resource is OOS, which is probably caused by a busy channel instead of a poor quality of a channel, then the terminal device may not report the OOS indication on the third resource, or report an IS indication instead.

Herein, optionally, the downlink signal may be at least one of following signals: a Wake-Up Signal (WUS), a Phase Tracking Reference Signal (PT-RS), a downlink Demodulation Reference Signal (DMRS), a Physical Downlink Control Channel (PDCCH), a Physical Downlink Shared Channel (PDSCH), CSI-RS sent on another resource except the first resource, SSB sent on another resource except the first resource, etc.

### Mode 2

In this mode, the terminal device determines whether to report an in sync (IS) indication and/or an out of sync (OOS) indication according to a result of RLM measurement on the first resource, and a result of RLM measurement on a second resource.

Multiple measurement resources (or referred to as multiple measurement windows) may be configured within one measurement period, and the multiple measurement resources include the first resource and the second resource. Optionally, the second resource is at least one measurement resource located after the first resource.

Optionally, the terminal device determines whether to report the IS indication and/or OOS indication according to the RLM measurement result on the first resource and the RLM measurement result on the second resource, including: if the result of the RLM measurement on the first resource is IS, the terminal device stops RLM on the second resource and determines to report the IS indication.

Optionally, the terminal device determines whether to report the IS indication and/or OOS indication according to the RLM measurement result on the first resource and the RLM measurement result on the second resource, including: if the result of the RLM measurement on the first resource is OOS, the terminal device continues to perform RLM on the second resource, and determines to report the OOS indication until results of RLM measurement on the multiple measurement resources are all OOS.

Specifically, when the result of the RLM measurement obtained by the terminal device to perform radio link monitoring on one measurement resource, i.e., the first resource, within one measurement period is IS, the terminal device may not continue to perform radio link monitoring within the measurement period, but directly determine that the result of the RLM measurement is IS and report the IS indication. If the result of the RLM measurement obtained from radio link monitoring on the first resource is OOS, then the terminal device may continue to perform radio link monitoring on the second resource after the first resource. If results of RLM measurement on all measurement resources in the measurement period are OOS, the terminal device determines that a result of link monitoring is OOS and reports the OOS indication.

In short, when the result of the RLM measurement on a certain measurement resource or some measurement resources in one measurement period is IS, the IS indication is reported; and only when the results of the RLM measurement on all measurement resources in one measurement period are OOS, will the OOS indication be reported.

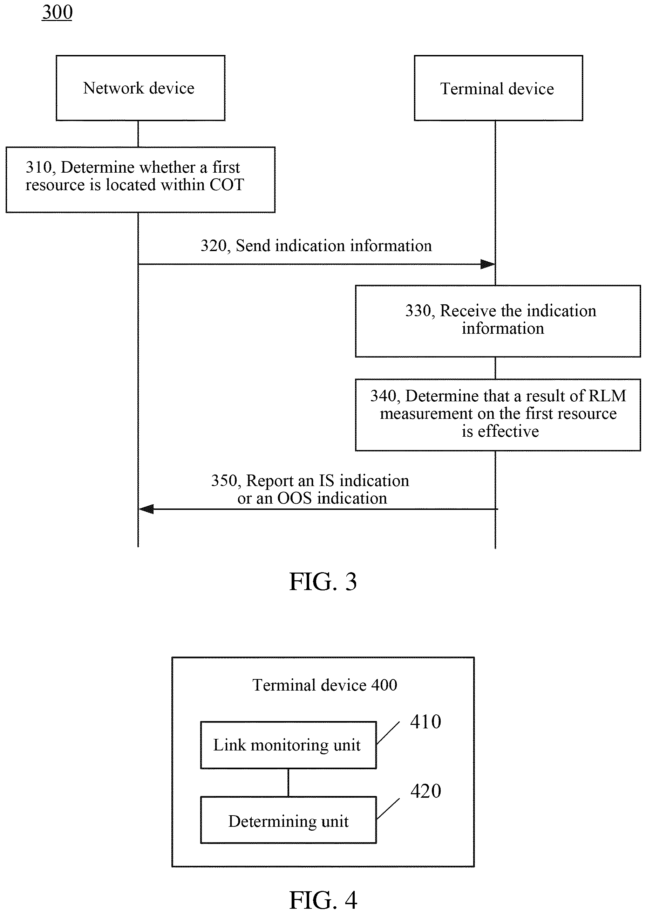

The method for monitoring a radio link described above is by changing an implementation behavior of the terminal device, so as to avoid frequent OOS indication reporting caused by a failure to send RLM-RS successfully due to the busy channel. An embodiment of the present application also provides a method for monitoring a radio link, which enables, by means of a network device, a terminal device to determine whether a result of RLM measurement on a current measurement resource is effective, thereby avoiding unnecessary OOS indication reporting, which will be described in detail below with reference to FIGs. 3 and 4.

FIG. 3 is a flow interaction diagram of a method 300 for monitoring a radio link according to an embodiment of the present application. The method of FIG. 3 may be performed by a terminal device and a network device, the network device may be, for example, the network device 110 shown in FIG. 1, and the terminal device may be, for example, the terminal device 120 shown in FIG. 1. As shown in FIG. 3, the method 300 for monitoring a radio link may include part or all of following acts.

In 310, a network device determines whether a first resource for radio link monitoring by a terminal device is located within COT.

In 320, if the first resource is located within the COT, the network device sends indication information to the terminal device, wherein the indication information is used for indicating that the first resource is an effective measurement resource.

In 330, the terminal device receives indication information sent by the network device, wherein the indication information indicates whether a first resource for radio link monitoring is an effective measurement resource.

In 340, if the indication information indicates that the first resource is an effective measurement resource, the terminal device determines that a result of RLM measurement on the first resource is effective.

In 350, the terminal device reports an IS indication or an OOS indication according to the result of the RLM measurement on the first resource.

Specifically, if the network device preempts a channel resource within one COT, it will determine whether the first resource for radio link monitoring by the terminal device is located within the COT. If the first resource is located within the COT, the network device sends indication information to the terminal device to indicate that the first resource is an effective measurement resource. If the first resource is not located within the COT, the network device may indicate whether the first resource is an effective measurement resource at a later time resource. After the terminal device receives the indication information sent by the network device, if it finds that the indication information indicates that the first resource is an effective measurement resource, then it may consider that the result of the RLF measurement on the first resource is effective.

It should be understood that if the terminal device has performed radio link monitoring on the first resource and obtained that the result of the RLM measurement is IS or OOS before receiving the indication information, then the terminal device may know whether the result of the RLM measurement is effective or ineffective when receiving the indication information. For example, if the result of the RLM measurement is effective, the terminal device may report an IS indication or an OOS indication based on the result of the RLM measurement, and if the result of the RLM measurement is not effective, then the terminal device may not report the IS indication or the OOS indication.

If the terminal device has not performed radio link monitoring on the first resource before receiving the indication information, when the indication information indicates that the first resource is an effective measurement resource, the terminal device can know that the result of the RLM measurement on the first resource is effective, so it may perform radio link monitoring on the first resource and report the result of the RLM measurement on the first resource; if the indication information indicates that the first resource is not an effective measurement resource, then the terminal device may not use the first resource for radio link monitoring.

Therefore, by determining whether a measurement resource is effective and indicating it to a terminal device, a network device enables the terminal device to perform radio link monitoring and report a result of RLM measurement on an effective measurement resources, thus improving the accuracy of radio link monitoring.

It should be noted that, on the premise of no conflict, various embodiments described in the present application and/or technical features in various embodiments may be arbitrarily combined with each other, and technical solutions obtained after combination should also fall into the protection scope of the present application.

It should be understood that in various embodiments of the present application, sequence numbers of the various processes do not imply an order of execution of the various processes, which should be determined by their functions and internal logics, and should not constitute any limitation on implementation processes of the embodiments of the present application. For example, 330 in FIG. 3 may be performed before 340, that is, before the terminal device performs RLM to obtain a result of RLM measurement; or it may be performed after 340, that is, after the terminal device obtains a result of RLM measurement.

The communication method according to the embodiments of the present application has been described in detail above. Apparatuses according to embodiments of the present application will be described below with reference to FIGs. 4 to 8. Technical features described in the method embodiments are applicable to following apparatus embodiments.

FIG. 4 is a schematic block diagram of a terminal device 400 according to an embodiment of the present application. As shown in FIG. 4, the terminal device 400 includes a link monitoring unit 410 and a determining unit 420. The link monitoring unit 410 is configured to perform radio link monitoring (RLM) on a first resource; the determining unit 420 is configured to determine whether to report an in sync (IS) indication and/or an out of sync (OOS) indication according to a result of RLM measurement on the first resource, and a result of RLM measurement or a downlink signal reception condition on a second resource.

Optionally, the determining unit 420 is specifically configured to determine to report the IS indication, if the result of the RLM measurement on the first resource is IS; and/or, determine whether to report the OOS indication according to whether the downlink signal sent by the network device is received on the second resource, if the result of the RLM measurement on the first resource is OOS.

Optionally, the determining unit 420 is specifically configured to determine not to report the OOS indication, if the terminal device receives the downlink signal on the second resource; and/or, determine to report the OOS indication, if the terminal device does not receive the downlink signal on the second resource.

Optionally, if the terminal device receives the downlink signal on the second resource, the determining unit 420 is further configured to determine to report the IS indication.

Optionally, the second resource includes at least one downlink resource within a predetermined time period before a third resource, wherein the third resource is used for reporting the result of the RLM measurement on the first resource.

Optionally, multiple measurement resources are included within one measurement period, and multiple measurement resources include the first resource and the second resource located after the first resource. The link monitoring unit 410 is specifically configured to stop, by the terminal device, RLM on the second resource, if the result of the RLM measurement on the first resource is IS; and the determining unit 420 is further configured to determine to report the IS indication.

Optionally, the link monitoring unit 410 is specifically configured to continue the RLM on the second resource, if the result of the RLM measurement on the first resource is OOS; and the determining unit 420 is further configured to determine to report the OOS indication until results of RLM measurement on the multiple measurement resources are all OOS.

Optionally, the link monitoring unit 410 is specifically configured to perform a Signal to Noise-Interference Ratio (SINR) measurement on the first resource; and the determining unit 420 is configured to determine that the result of the RLM measurement on the first resource is IS, if the measured and obtained SINR is greater than an in sync threshold Qin; and determine that the result of the RLM measurement on the first resource is OOS, if the measured and obtained SINR is less than an out of sync threshold Qout.

It should be understood that the terminal device 400 may perform the corresponding operations performed by the terminal device in the above method 200, which will not be repeated here for brevity.

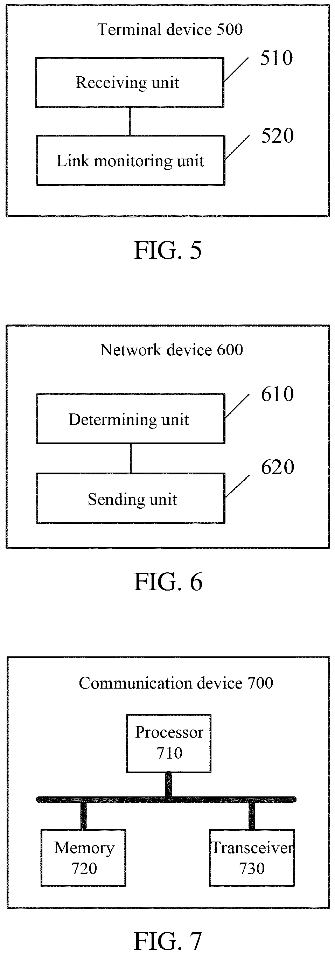

FIG. 5 is a schematic block diagram of a terminal device 500 according to an embodiment of the present application. As shown in FIG. 5, the terminal device 500 includes a receiving unit 510 and a link monitoring unit 520. The receiving unit 510 is configured to receive indication information sent by a network device, wherein the indication information indicates whether a first resource for radio link monitoring is an effective measurement resource; the link monitoring unit 520 is configured to determine, by the terminal device, that the result of the RLM measurement on the first resource is effective, if the first resource is the effective measurement resource.

It should be understood that the terminal device 500 may perform the corresponding operations performed by the terminal device in the above method 300, which will not be repeated here for brevity.

FIG. 6 is a schematic block diagram of a network device 600 according to an embodiment of the present application. As shown in FIG. 6, the network device 600 includes a determining unit 610 and a sending unit 620. The determining unit 610 is configured to determine whether a first resource for radio link monitoring by a terminal device is located within channel occupation time COT; the sending unit 620 is configured to send indication information to the terminal device, if the first resource is located within the COT, wherein the indication information is used for indicating that the first resource is an effective measurement resource.

It should be understood that the network device 600 may perform the corresponding operations performed by the network device in the above method 300, which will not be repeated here for brevity.

FIG. 7 is a schematic structural diagram of a communication device 700 according to an embodiment of the present application. The communication device 700 shown in FIG. 7 includes a processor 710, wherein the processor 710 may call and run a computer program from a memory to implement the method in the embodiment of the present application.

Optionally, as shown in FIG. 7, the communication device 700 may further include a memory 720. The processor 710 may call and run a computer program from the memory 720 to implement the method in the embodiment of the present application.

The memory 720 may be a separate device independent of the processor 710 or may be integrated in the processor 710.

Optionally, as shown in FIG. 7, the communication device 700 may further include a transceiver 730, and the processor 710 may control the transceiver 730 to communicate with another device. Specifically, information or data may be sent to another device, or information or data sent by another device may be received.

The transceiver 730 may include a transmitter and a receiver. The transceiver 730 may further include antennas, and the quantity of antennas may be one or more.

Optionally, the communication device 700 may be specifically a terminal device of the embodiment of the present application, and the communication device 700 may implement corresponding processes implemented by the terminal device in the various methods of the embodiments of the present application, which will not be repeated here for brevity.

Optionally, the communication device 700 may be specifically a network device of the embodiment of the present application, and the communication device 700 may implement corresponding processes implemented by the network device in the various methods of the embodiments of the present application, which will not be repeated here for brevity.

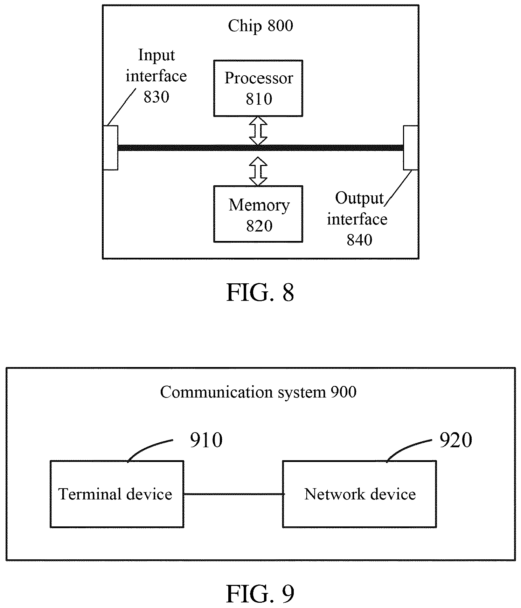

FIG. 8 is a schematic structural diagram of a communication apparatus according to an embodiment of the present application. An apparatus 800 shown in FIG. 8 includes a processor 810. The processor 810 may call and run a computer program from a memory to implement the method in the embodiment of the present application.

Optionally, as shown in FIG. 8, the apparatus 800 may further include a memory 820. The processor 810 may call and run a computer program from the memory 820 to implement the method in the embodiment of the present application.

The memory 820 may be a separate device independent of the processor 810 or may be integrated in the processor 810.

Optionally, the apparatus 800 may further include an input interface 830. The processor 810 may control the input interface 830 to communicate with other devices or chips. Specifically, information or data sent by other devices or chips may be acquired.

Optionally, the apparatus 800 may further include an output interface 840. The processor 810 may control the output interface 840 to communicate with other devices or chips. Specifically, information or data may be output to other devices or chips.

Optionally, the apparatus may be applied in a network device of the embodiment of the present application, and the chip may implement corresponding processes implemented by the network device in various methods of the embodiments of the present application, which will not be repeated here for brevity.

Optionally, the apparatus may be applied in a terminal device of the embodiment of the present application, and the chip may implement corresponding processes implemented by the terminal device in various methods of the embodiments of the present application, which will not be repeated here for brevity.

Optionally, the apparatus 800 may be a chip.

It should be understood that the chip mentioned in the embodiment of the present application may be referred to as a system-level chip, a system chip, a chip system or a system-on-chip, etc.

It should be understood that, the processor in the present embodiment of the present application may be an integrated circuit chip having a signal processing capability. In an implementation process, the steps of the foregoing method embodiments may be implemented by using an integrated logic circuit of hardware in the processor or instructions in a form of software. The processor may be a general purpose processor, a digital signal processor (Digital Signal Processing, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. The methods, steps and logical block diagrams disclosed in the present embodiment of the present application may be implemented or performed. The general purpose processor may be a microprocessor, or the processor may alternatively be any conventional processor, or the like. The acts of the method disclosed with reference to the present embodiment of the present application may be directly implemented by a hardware decoding processor, or may be implemented by a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It may be understood that, the memory in the present embodiment of the present application may be a transitory memory or a non-transitory memory, or may include both a transitory memory and a non-transitory memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The transitory memory may be a random access memory (Random Access Memory, RAM), and is used as an external cache. Through exemplary but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus dynamic random access memory (Direct Rambus RAM, DR RAM). It should be noted that the memory in the systems and methods described in this specification is aimed at including but being not limited to these and any memory of another proper type.

It should be understood that, the foregoing memory is an example for illustration and should not be construed as limiting. For example, optionally, the memory in the embodiments of the present application may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Direct Rambus RAM (DR RAM), or the like. That is, memories in the embodiments of the present application are intended to include, but are not limited to, these and any other suitable types of memories.

FIG. 9 is a schematic block diagram of a communication system 900 according to an embodiment of the present application. As shown in FIG. 9, the communication system 900 may include a terminal device 910 and a network device 920.

Herein, the terminal device 910 is configured to receive indication information sent by a network device, wherein the indication information indicates whether a first resource for radio link monitoring is an effective measurement resource; if the first resource is the effective measurement resource, the terminal device performs radio link monitoring on the first resource, and reports an IS indication or an OOS indication.

Herein, the network device 920 is configured to determine whether the first resource for radio link monitoring by the terminal device is located within COT; send indication information to the terminal device, if the first resource is located within the COT, wherein the indication information is used for indicating that the first resource is an effective measurement resource.

Herein, the terminal device 910 may be configured to implement corresponding functions implemented by the terminal device in the above method 300, and composition of the terminal device 910 may be as shown in the terminal device 500 in FIG. 5, which will not be repeated here for brevity.

Herein, the terminal device 920 may be configured to implement corresponding functions implemented by the network device in the above method 300, and composition of the network device 910 may be as shown in the network device 600 in FIG. 6, which will not be repeated here for brevity.

An embodiment of the present application further provides a computer readable storage medium configured to store a computer program.

Optionally, the computer readable storage medium may be applied in a terminal device of the embodiment of the present application, and the computer program causes a computer to perform corresponding processes implemented by the terminal device in various methods of the embodiments of the present application, which will not be repeated here for brevity.

Optionally, the computer readable storage medium may be applied in a network device of the embodiment of the present application, and the computer program causes a computer to perform corresponding processes implemented by the network device in various methods of the embodiments of the present application, which will not be repeated here for brevity.

An embodiment of the present application also provides a computer program product including computer program instructions.

Optionally, the computer program product may be applied in a terminal device of the embodiment of the present application, and the computer program instructions cause a computer to perform corresponding processes implemented by the terminal device in various methods of the embodiments of the present application, which will not be repeated here for brevity.

Optionally, the computer program product may be applied in a network device of the embodiment of the present application, and the computer program instructions cause a computer to perform corresponding processes implemented by the network device in various methods of the embodiments of the present application, which will not be repeated here for brevity.

An embodiment of the present application also provides a computer program.

Optionally, the computer program may be applied in a terminal device of the embodiment of the present application. When being run on a computer, the computer program causes a computer to perform corresponding processes implemented by the terminal device in various methods of the embodiments of the present application, which will not be repeated here for brevity.

Optionally, the computer program may be applied in a network device of the embodiment of the present application. When being run on a computer, the computer program causes a computer to perform corresponding processes implemented by the network device in various methods of the embodiments of the present application, which will not be repeated here for brevity.

It should be understood that the terms "system" and "network" are often used interchangeably in this document. The term "and/or" in this document is merely an association relationship describing associated objects, indicating that there may be three relationships, for example, A and/or B may indicate three cases: A alone, A and B, and B alone. In addition, the symbol "/" in this document generally indicates that objects before and after the symbol "/" have an "or" relationship.

It should also be understood that in an embodiment of the present invention, "B corresponding to (correspond to) A" means that B is associated with A, and B may be determined according to A. However, it should be further understood that determining B according to A does not mean that B is determined according to A only, but B may be determined according to A and/or other information.

A person of ordinary skill in the art may be aware that, in combination with the examples of units and algorithm acts described in the embodiments disclosed in this specification, the present application may be implemented by using electronic hardware or a combination of computer software and electronic hardware. Whether the functions are implemented by using hardware or software depends on a particular application and a design constraint condition of the technical solution. A person skilled in the art may use different methods to implement the described functions for each particular application, but it should not be considered that the implementation goes beyond the scope of the present application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the apparatus embodiment described above is only illustrative, for example, the division of the unit is only a logical function division, and there may be other ways of division in actual implementation, for example, multiple units or components may be combined or integrated into another system, or some features may be ignored or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected based on actual requirements to achieve the objectives of the solutions of the embodiments.

In addition, various functional units in various embodiments of the present application may be integrated in one processing unit, or various units may be physically present separately, or two or more units may be integrated in one unit.

When the functions are implemented in the form of a software functional unit and sold or used as an independent product, the functions may be stored in a computer-readable storage medium. Based on such an understanding, the technical solutions of the present application essentially, or the part contributing to the prior art, or a part of the technical solutions may be implemented in a form of a software product. The computer software product is stored in a memory medium and includes several instructions for instructing a computer device (which may be a personal computer, a server, a network device, or the like) to perform all or some of the acts of the methods described in the embodiments of the present application. The aforementioned storage medium includes various media capable of storing program codes, such as a U disk, a mobile hard disk, a read-only memory (ROM), a random access memory (RAM), a magnetic disk, or an optical disk.

The foregoing descriptions are merely specific implementations of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A method for radio link monitoring, comprising:
performing, by a terminal device, radio link monitoring (RLM) on a first resource;
determining, by the terminal device, whether to report an in sync (IS) indication and/or an out of sync (OOS) indication according to a result of RLM measurement on the first resource, and a result of RLM measurement or a downlink signal reception condition on a second resource.

2. The method according to claim 1, wherein determining, by the terminal device, whether to report the IS indication and/or the OOS indication according to the result of the RLM measurement on the first resource, and the downlink signal reception condition on the second resource, comprises:
determining, by the terminal device, to report the IS indication, if the result of the RLM measurement on the first resource is IS; and/or,
determining, by the terminal device, whether to report the OOS indication according to whether a downlink signal sent by a network device is received on the second resource, if the result of the RLM measurement on the first resource is OOS.

3. The method according to claim 2, wherein determining, by the terminal device, whether to report the OOS indication according to whether the downlink signal sent by the network device is received on the second resource, comprises:
determining, by the terminal device, not to report the OOS indication, if the terminal device receives the downlink signal on the second resource; and/or,
determining, by the terminal device, to report the OOS indication, if the terminal device does not receive the downlink signal on the second resource.

4. The method according to claim 3, wherein if the terminal device receives the downlink signal on the second resource, the method further comprises:
determining, by the terminal device, to report the IS indication.

5. The method according to any one of claims 1 to 4, wherein the second resource comprises at least one downlink resource within a predetermined time period before a third resource, wherein the third resource is used for reporting the result of the RLM measurement on the first resource.

6. The method according to claim 1, wherein a plurality of measurement resources are included within one measurement period, and the plurality of measurement resources comprise the first resource and the second resource located after the first resource,
determining, by the terminal device, whether to report the IS indication and/or the OOS indication according to the result of the RLM measurement on the first resource, and the result of the RLM measurement on the second resource, comprises:
stopping, by the terminal device, RLM on the second resource and determining to report the IS indication, if the result of the RLM measurement on the first resource is IS.

7. The method according to claim 6, wherein determining, by the terminal device, whether to report the IS indication and/or the OOS indication according to the result of the RLM measurement on the first resource, and the result of the RLM measurement on the second resource, comprises:
continuing, by the terminal device, the RLM on the second resource, if the result of the RLM measurement on the first resource is OOS, and determining to report the OOS indication until results of RLM measurement on the plurality of measurement resources are all OOS.

8. The method according to any one of claims 1 to 7, wherein performing, by the terminal device, the RLM on the first resource, comprises:
performing, by the terminal device, a Signal to Noise-Interference Ratio (SINR) measurement on the first resource;
the method further comprises:
determining, by the terminal device, that the result of the RLM measurement on the first resource is IS, if the measured and obtained SINR is greater than an in sync threshold Qin;
determining, by the terminal device, that the result of the RLM measurement on the first resource is OOS, if the measured and obtained SINR is less than an out of sync threshold Qout.

9. A terminal device, comprising:
a link monitoring unit, configured to perform radio link monitoring (RLM) on a first resource;
a determining unit, configured to determine whether to report an in sync (IS) indication and/or an out of sync (OOS) indication according to a result of RLM measurement on the first resource, and a result of RLM measurement or a downlink signal reception condition on a second resource.

10. The terminal device according to claim 9, wherein the determining unit is specifically configured to:
determine to report the IS indication, if the result of the RLM measurement on the first resource is IS; and/or,
determine whether to report the OOS indication according to whether a downlink signal sent by a network device is received on the second resource, if the result of the RLM measurement on the first resource is OOS.

11. The terminal device according to claim 10, wherein the determining unit is specifically configured to:
determine not to report the OOS indication, if the terminal device receives the downlink signal on the second resource; and/or,
determine to report the OOS indication, if the terminal device does not receive the downlink signal on the second resource.

12. The terminal device according to claim 11, wherein if the terminal device receives the downlink signal on the second resource, the determining unit is further configured to:
determine to report the IS indication.

13. The terminal device according to any one of claims 9 to 12, wherein the second resource comprises at least one downlink resource within a predetermined time period before a third resource, wherein the third resource is used for reporting the result of the RLM measurement on the first resource.

14. The terminal device according to claim 9, wherein a plurality of measurement resources are included within one measurement period, and the plurality of measurement resources comprise the first resource and the second resource located after the first resource,
the link monitoring unit is specifically configured to stop, by the terminal device, RLM on the second resource, if the result of the RLM measurement on the first resource is IS;
the determining unit is further configured to determine to report the IS indication.

15. The terminal device according to claim 14, wherein the link monitoring unit is specifically configured to:
continue the RLM on the second resource, if the result of the RLM measurement on the first resource is OOS;
the determining unit is further configured to determine to report the OOS indication until results of RLM measurement on the plurality of measurement resources are all OOS.

16. The terminal device according to any one of claims 9 to 15, wherein the link monitoring unit is specifically configured to:
perform a Signal to Noise-Interference Ratio (SINR) measurement on the first resource;
the determining unit is configured to:
determine that the result of the RLM measurement on the first resource is IS, if the measured and obtained SINR is greater than an in sync threshold Qin;
determine that the result of the RLM measurement on the first resource is OOS, if the measured and obtained SINR is less than an out of sync threshold Qout.

17. A terminal device, comprising: a processor and a memory, wherein the memory is configured to store a computer program, and the processor is configured to call and run the computer program stored in the memory to execute the method according to any one of claims 1 to 8.

18. A chip, comprising: a processor, wherein the processor is configured to call and run a computer program from a memory, enabling a device disposed with the chip to perform the method according to any one of claims 1 to 8.

19. A computer readable storage medium, configured to store a computer program, wherein the computer program causes a computer to perform the method according to any one of claims 1 to 8.

20. A computer program product, comprising computer program instructions, wherein the computer program instructions cause a computer to perform the method according to any one of claims 1 to 8.

21. A computer program, causing a computer to perform the method according to any one of claims 1 to 8.
